# EUROPEAN PATENT APPLICATION

(11) **EP 4 611 119 A1**
(43) Date of publication of application: **03.09.2025**
(21) Application number: 23936423.5
(22) Date of filing: 17.11.2023
(51) Int. Cl.: H01M 10/613, H01M 10/625, H01M 10/647, H01M 10/655, H01M 10/42, H01M 50/244, H01M 50/249, H01M 50/209

(54) **BATTERY AND ELECTRIC DEVICE HAVING SAME**

(30) Priority: 08.05.2023 CN 202321086507 U
(71) Applicant: Contemporary Amperex Technology Co., Limited, Ningde, Fujian 352100 (CN)
(72) Inventor: JIN, Haizu, Ningde, Fujian 352100 (CN); LAI, Hui, Ningde, Fujian 352100 (CN); HAN, Fengsheng, Ningde, Fujian 352100 (CN); LI, Ting, Ningde, Fujian 352100 (CN)
(74) Representative: Kraus & Lederer PartGmbB
(86) International application number: PCT/CN2023/132383
(87) International publication number: WO 2024/230119

(57) **Abstract**

A battery (200) and a power consuming apparatus (1000) are disclosed. The battery includes a box body (30), and multiple battery cells (10) and a heat conducting member (40) arranged in the box body. Each battery cell is provided with multiple side walls (110). The multiple side walls include a first side wall (111) and a second side wall (112) connected to each other. The first side wall is a side wall with the largest area of the battery cell. The second side walls of at least part of the battery cells are connected to the box body in a heat conducting manner through the heat conducting member.

## Description

### CROSS-REFERENCE TO RELATED APPLICATIONS

The present application claims priority to Chinese Patent Application No. 202321086507.4, filed with the China National Intellectual Property Administration on May 8, 2023 and entitled "BATTERY AND POWER CONSUMING APPARATUS WITH SAME", which is incorporated herein by reference in its entirety.

### TECHNICAL FIELD

The present application relates to the technical field of batteries, and in particular, to a battery and a power consuming apparatus with the same.

### BACKGROUND

A battery generally includes a box body and battery cells arranged in the box body.

For the battery cells, unexpected temperature increases may occur due to overheating, short circuits, overcharging, self-heating, or mechanical collisions. If the heat generated during the temperature increase exceeds the speed of heat dissipation to the environment and the temperature continues to increase, when certain critical temperature is reached, especially when the temperature at which the separator of the battery collapses is reached, the battery cells may be broken down and thermal runaway may be caused. In the existing batteries, when one of the battery cells experiences thermal runaway, it is easy to cause thermal diffusion throughout the battery, ultimately leading to a safety accident of the battery and reducing the use safety of the battery.

Therefore, there is an urgent need for a battery that can meet the requirement of no thermal diffusion.

### SUMMARY

In view of this, according to a first aspect of the present application, a battery is provided, which can meet the requirement of no thermal diffusion to guarantee the use safety of the battery.

The battery according to the embodiment of the present application includes: a box body, multiple battery cells, and a heat conducting member. The multiple battery cells are arranged in the box body. Each battery cell is provided with multiple side walls. The multiple side walls include a first side wall and a second side wall. The first side wall and the second side wall are connected to each other. The first side wall is a side wall with the largest area of the battery cell. The heat conducting member is arranged in the box body. The second side walls of at least part of the battery cells are connected to the box body in a heat conducting manner through the heat conducting member.

In the battery according to the embodiment of the present application, by connecting the second side walls of at least part of the battery cells to the box body in a heat conducting manner through the heat conducting member, heat generated by the battery cells can be directly transferred to the box body through the heat conducting member, thus preventing a large amount of heat from being transferred to adjacent battery cells when thermal runaway occurs in one of the battery cells, making the battery meet the requirement of no thermal diffusion, and improving the safety performance of the battery.

Optionally, the heat conducting member is connected to different side walls of the box body in a heat conducting manner. A contact area between the heat conducting member and the box body can increased, thus further ensuring that the heat conducting member can effectively transfer the heat on the battery cells to the box body, and ensuring that the battery can meet the requirement of no thermal diffusion.

In some embodiments, a first heat conducting adhesive layer is provided between the heat conducting member and the box body. While achieving a fixed connection between the heat conducting member and the box body, it can also be ensured that the heat conducting member can effectively transfer the heat on the battery cells to the box body.

In some embodiments, multiple rows of battery units are provided in the box body. Each row of the battery units includes multiple battery cells arranged along a first direction, and the heat conducting member is provided between the second side walls of at least one row of the battery units and the box body in the first direction. It can be ensured that when thermal runaway occurs in at least one row of the battery cells, the heat can be directly transferred to the box body, thus preventing this row of the battery cells from transferring a large amount of heat to adjacent rows of battery cells, so as to achieve the purpose of preventing thermal diffusion.

In some embodiments, at least two rows of the battery units are arranged in a staggered manner in the first direction so that the first side walls of adjacent rows of battery cells arranged opposite each other are staggered in the first direction. A contact area between adjacent rows of two battery cells arranged opposite each other can be reduced, thus reducing heat transfer between the two battery cells arranged opposite each other, preventing thermal diffusion, and ensuring that the battery can meet the requirement of no thermal diffusion.

In some embodiments, orthographic projections of the first side walls of the adjacent rows of battery cells arranged in a staggered manner in a second direction have non-overlapping portions, and the non-overlapping portions are in contact with the heat conducting member in a heat insulating manner. Contact in a heat insulating manner can further reduce heat transfer between two battery cells which are arranged opposite each other, and ensure that the battery can meet the requirement of no thermal diffusion.

In some embodiments, the heat conducting member includes a heat conducting layer and a heat insulating layer which are arranged in a stacked manner. The heat conducting layer is connected to the second side wall in a heat conducting manner. The heat insulating layer is in contact with the non-overlapping portions. By connecting the heat conducting layer with the second side wall in a heat conducting manner, the heat generated by the battery cells can be directly transferred to the box body through the heat conducting member, thus preventing a large amount of heat from being directly transferred to adjacent battery cells. The heat insulating layer is in contact with the non-overlapping portions to achieve heat insulating match between the battery cells arranged opposite each other, thus reducing the probability of heat transfer between the two battery cells arranged opposite each other, further preventing a large amount of heat from being transferred to other battery cells when thermal runaway occurs in the battery cells, and making the battery meet the requirement of no thermal diffusion.

In some embodiments, a second heat conducting adhesive layer is provided between the heat conducting layer and the opposite second side wall. While achieving a fixed connection between the heat conducting member and the battery cell, it can also be ensured that the heat on the battery cell can be effectively transferred to the heat conducting member, thus making it easier to transfer the heat on the battery cell to the box body through the heat conducting member to achieve the purpose of heat dissipation.

In some embodiments, a thickness of the heat conducting layer is greater than that of the heat insulating layer. Therefore, the heat conducting performance of the heat conducting member can be ensured, thus ensuring that the heat generated by the battery cell when thermal runaway occurs can be effectively transferred to the box body through the heat conducting member.

In some embodiments, a ratio of the thickness of the heat insulating layer to the thickness of the heat conducting layer is not greater than 1/2. Therefore, the heat conducting performance of the heat conducting member can be further ensured, thus ensuring that the heat generated by the battery cell when thermal runaway occurs can be effectively transferred to the box body through the heat conducting member.

In some embodiments, the heat conducting member is filled in a gap between the battery cells and an inner wall of the box body. While ensuring that a volume of the battery is not increased, the heat conducting member can be effectively arranged between the battery cells and the box body to transfer the heat on the battery cells to the box body through the heat conducting member. In addition, by using the heat conducting member, position stability between the battery cells and the box body can be improved.

In some embodiments, the heat conducting member is constructed to be deformable to buffer a stress. That is to say, the heat conducting member has a buffering effect, thus protecting the battery through the heat conducting member, improving the squeezing and impact resistance of the battery, and extending the service life of the battery.

In a second aspect, the present application provides a power consuming apparatus, which includes a battery, and the battery is the battery described in the above embodiment. The battery is configured to provide electric energy.

In the technical solution of the embodiment of the present application, by adopting the battery described in the above embodiment, the use safety of the power consuming apparatus can be improved, and the service life of the power consuming apparatus can be extended.

Additional aspects and advantages of the present application will be provided in the following description, some of which will become apparent from the following description or may be learned from practices of the present application.

### BRIEF DESCRIPTION OF THE DRAWINGS

The foregoing and/or additional aspects and advantages of the present application will become apparent and comprehensible from the following descriptions of embodiments with reference to the accompanying drawings, where:
FIG. 1 is a schematic diagram of a battery according to some embodiments of the present application;
FIG. 2 is a top view of a battery according to some embodiments of the present application;
FIG. 3 is a partial enlarged view of area I in FIG. 2;
FIG. 4 is a schematic diagram of a heat conducting member according to some embodiments of the present application; and
FIG. 5 is a schematic structural diagram of a power consuming apparatus according to some embodiments of the present application.

### Reference numerals:

1000-power consuming apparatus; 200-battery; 300-controller; 400-motor;
10A-battery unit; 10-battery cell; 11-side wall; 111-first side wall; 112-second side wall;
20-non-overlapping portion;
30-box body;
40-heat conducting member; 41-heat conducting layer; 42-heat insulating layer;
X-first direction; Y-second direction; and Z-third direction.

### DETAILED DESCRIPTION

To make the purposes, technical solutions and advantages of the embodiments of the present application clearer, the technical solutions in the embodiments of the present application will be clearly described below with reference to the drawings in the embodiments of the present application. Clearly, the described embodiments are merely some rather than all of the embodiments of the present application. All other embodiments obtained by those of ordinary skill in the art based on the embodiments of the present application without making any inventive labor still fall within the scope of protection of the present application.

Unless otherwise defined, meanings of all technical and scientific terms used in the present application are the same as those usually understood by those skilled in the art to which the present application belongs. In the present application, terms used in the description of the present application are merely intended to describe objectives of specific embodiments, but are not intended to limit the present application. The terms "include", "comprise", and any variant thereof in the description and the claims of the present application and the description of the drawings are intended to cover a non-exclusive inclusion. Terms such as "first" and "second" in the description, claims and accompanying drawings of the present application are used for distinguishing different objects, instead of describing a specific order or primary and secondary relationships.

"Embodiment" mentioned in the present application means that particular features, structures, or characteristics described with reference to the embodiment may be included in at least one embodiment of the present application. The term appearing at different positions of the description may not necessarily refer to the same embodiment or an independent or alternative embodiment that is mutually exclusive with another embodiment. A person skilled in the art explicitly or implicitly understands that the embodiments described herein may be combined with other embodiments.

In the description of the present application, it should be noted that unless otherwise explicitly specified and defined, the terms "mount", "connect", "connected", and "attach" should be understood in a broad sense. For example, it may be fixed connection, detachable connection, or integral connection; or it may be direct connection, an indirect connection through an intermediate medium, or internal communication between two components. For those of ordinary skill in the art, the specific meanings of the above terms in the present application may be interpreted according to specific situations.

In the present application, the term "and/or" is merely an association to describe associated objects, and means that three relationships may exist. For example, A and/or B may represent the following three cases: only A exists, both A and B exist, and only B exists. In addition, the character "/" in the present application generally indicates an "or" relationship between associated objects.

In the embodiments of the present application, the same reference numerals represent the same components, and for the sake of simplicity, detailed descriptions of the same components are omitted in different embodiments. It should be understood that the thickness, length, width, and other dimensions of various components in the embodiments of the present application shown in the accompanying drawings, as well as the overall thickness, length, width, and other dimensions of the integrated apparatus, are only exemplarily descriptive and should not constitute any limitation on the present application.

At present, from the development of the market situation, the application of batteries 200 is becoming increasingly widespread. Batteries 200 are not only applied to energy storage power source systems such as water, fire, wind and solar power stations, but also widely applied to electric transport tools, such as electric bicycles, electric motorcycles, and electric vehicles, as well as many fields, such as military equipment and aerospace.

With the continuous expansion of the application field of the batteries 200, the market demand is also constantly expanding.

A battery 200 generally includes structures such as a box body 30 and battery cells 10. In a working process of the battery 200, the battery cells 10 may experience unexpected temperature increases due to overheating, short circuits, overcharging, self-heating, or mechanical collisions occurring in the battery cells 10. If the heat generated during the temperature increase exceeds the speed of heat dissipation to the environment and the temperature continues to increase, when the continuously increasing temperature reaches certain critical temperature, especially when the temperature at which a separator of the battery 200 collapses is reached, the battery cells 10 may be broken down and thermal runaway may be caused.

The applicant has noticed that in the existing battery 200, when thermal runaway occurs in one of the battery cells 10 of the battery 200, heat may be quickly transferred to adjacent battery cells 10, causing thermal diffusion throughout the battery 200, resulting in low safety of the battery 200 and shortening the service life of the battery 200.

To solve the above problems, an embodiment of the present application provides a battery 200 that can reduce rapid diffusion of heat between adjacent battery cells 10. The specific solution is to arrange a heat conducting member 40 in a box body 30, and connect second side walls 112 of at least part of the battery cells 10 to the box body 30 in a heat conducting manner through the heat conducting member 40. In this way, when thermal runaway occurs in the battery cells 10, the heat conducting member 40 can directly transfer the heat on the battery cells 10 to the box body 30, thus preventing a large amount of heat from being directly transferred to the adjacent battery cells 10 when thermal runaway occurs in one of the battery cells 10, that is, preventing a large amount of heat from being rapidly transferred between adjacent battery cells 10, so as to improve the safety performance of the battery 200 and extend the service life of the battery 200.

It should be noted that the battery 200 disclosed in the embodiment of the present application may be applied to, but not limited to, a power consuming apparatus 1000 such as a vehicle, a ship or an air vehicle. A power supply system of the power consuming apparatus 1000 may be composed of the battery 200 disclosed in the present application, which is beneficial for improving the use safety of the power supply system in the power consuming apparatus 1000 and extending the service life of the power supply system.

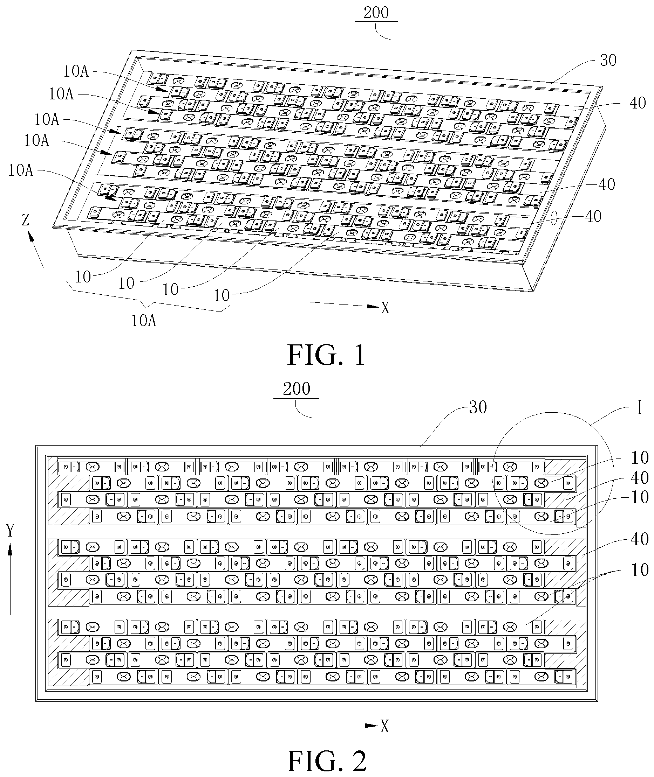

The battery 200 according to the embodiment of the present application will be described below with reference to FIG. 1 to FIG. 4.

As shown in FIG. 1 and FIG. 2, the battery 200 according to the embodiment of the present application includes: a box body 30, multiple battery cells 10, and a heat conducting member 40.

As shown in FIG. 1 and FIG. 2, the multiple battery cells 10 are arranged in the box body 30. The battery cells 10 can be supported and protected by using the box body 30, thus extending the service life of the battery cells 10 and improving the position stability of the battery cells 10.

In some examples, an accommodating cavity is formed in the box body 30, and the multiple battery cells 10 are all arranged in the accommodating cavity to achieve the purpose of arranging the multiple battery cells 10 in the box body 30.

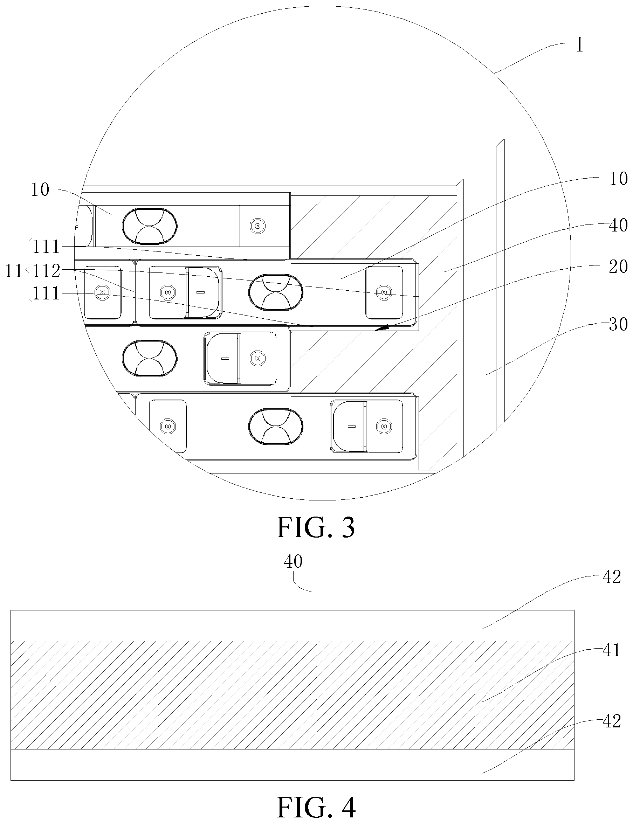

As shown in FIG. 2 and FIG. 3, each battery cell 10 is provided with multiple side walls 11. The multiple side walls 11 include a first side wall 111 and a second side wall 112. The first side wall 111 and the second side wall 112 are connected to each other. The first side wall 111 is a side wall with the largest area of the battery cell 10. Here, it may also be understood that each battery cell 10 includes a first side wall 111 and a second side wall 112 which are connected to each other. An area of the second side wall 112 is smaller than that of the first side wall 111, so that the first side wall 111 is formed as the side wall with the largest area of the battery cell 10.

As shown in FIG. 2 and FIG. 3, the heat conducting member 40 is arranged in the box body 30. The second side walls 112 of at least part of the battery cells 10 are connected to the box body 30 in a heat conducting manner through the heat conducting member 40. That is to say, at least part of the battery cells 10 are connected to the box body 30 in a heat conducting manner through the heat conducting member 40. In this way, while achieving fixed connection between at least part of the battery cells 10 and the box body 30, it is easy to transfer the heat on the battery cells 10 to the box body 30 through the heat conducting member 40, thus preventing the energy released by the thermal runaway of the battery cells 10 in the battery 200 from being all transferred to the adjacent battery cells 10, preventing thermal runaway between the adjacent battery cells 10 and improving the use safety of the battery 200.

From the above structure, it can be seen that in the battery 200 in the present application, the heat conducting member 40 is arranged in the box body 30, and the second side walls 112 of at least part of the battery cells 10 are connected to the box body 30 in a heat conducting manner through the heat conducting member 40 to achieve fixed connection between at least part of the battery cells 10 and the box body 30, so that at least part of the battery cells 10 can be stably arranged in the box body 30, thus improving the position stability of at least part of the battery cells 10, that is, improving the structural stability of the battery 200, and ensuring the working performance of the battery 200.

At the same time, because the second side walls 112 of at least part of the battery cells 10 are connected to the box body 30 in a heat conducting manner through the heat conducting member 40, when thermal runaway occurs in the battery cells 10, the heat generated on the battery cells 10 can be transferred to the box body 30 in time through the heat conducting member 40 to prevent a large amount of heat on the battery cells 10 from being directly transferred between two adjacent battery cells 10, thus preventing thermal runaway from occurring between the adjacent battery cells 10, making the battery 200 meet the requirement of no thermal diffusion, and improving the safety performance of the battery 200.

In addition, by connecting the second side walls 112 of at least part of the battery cells 10 to the box body 30 in a heat conducting manner through the heat conducting member 40, the heat generated by the battery cells 10 during working can be directly conducted out through the box body 30, thus improving the heat dissipation and cooling effect of the battery cells 10.

That is to say, in the present application, by arranging the heat conducting member 40 that achieves the heat conducting connection between at least part of the battery cells 10 and the box body 30, while avoiding thermal runaway between the adjacent battery cells 10, the heat dissipation effect of the battery cells 10 can be improved, thus reducing the possibility of thermal runaway occurring in the battery cells 10.

It may be understood that, compared with the prior art, in the present application, the second side walls 112 of at least part of the battery cells 10 are connected to the box body 30 in a heat conducting manner through the heat conducting member 40, so that the heat on the battery cells 10 can be transferred to the box body 30 in time, thus preventing a large amount of heat from being directly transferred between two adjacent battery cells 10, that is, preventing thermal runaway between the adjacent battery cells 10, making the battery 200 meet the requirement of no thermal diffusion, and improving the safety performance of the battery 200.

In some embodiments, the heat conducting member 40 is connected to different side walls of the box body 30 in a heat conducting manner. Here, it refers to that the box body 30 is provided with multiple different side walls, and the heat conducting member 40 is simultaneously connected to the different side walls of the box body 30 to increase a contact area between the heat conducting member 40 and the box body 30, thus ensuring that the heat conducting member 40 can effectively transfer the heat on the battery cells 10 to the box body 30, making the battery 200 meet the requirement of no thermal diffusion and improving the use safety of the battery 200.

In addition, by connecting the heat conducting member 40 to the different side walls of the box body 30 in a heat conducting manner, the connection strength between the heat conducting member 40 and the box body 30 can be also ensured, so as to use the box body 30 to support the heat conducting member 40 and improve the structural stability of the heat conducting member 40, thus ensuring that the heat conducting member 40 can effectively transfer the heat on the battery cells 10 to the box body 30.

In some examples, the box body 30 is provided with a bottom wall and end walls connected to the bottom wall. The bottom wall and the end walls cooperate to form an accommodating cavity. The multiple battery cells 10 and the heat conducting member 40 are all arranged in the accommodating cavity, and the heat conducting member 40 is simultaneously connected to the bottom wall and the end walls of the box body 30 to achieve the purpose of connecting the heat conducting member 40 to different side walls of the box body 30 in a heat conducting manner, thus ensuring that the heat conducting member 40 can transfer the heat on the battery cells 10 to the end walls and the bottom wall of the box body 30 in time when thermal runaway occurs in the battery cells 10.

Optionally, an extension height of the heat conducting member 40 in a third direction Z is adapted to an extension height of the box body 30 in the third direction Z. The third direction Z mentioned here may be understood as a Z direction shown in FIG. 1, i.e., a height direction of the box body 30. Through the above arrangement, when the heat conducting member 40 is connected to the end walls of the box body 30 in a heat conducting manner, the contact area between the heat conducting member 40 and the box body 30 can be further increased, so that the heat on the battery cells 10 can be transferred to the box body 30 in time, thus preventing the heat from being diffused between the battery cells 10.

In some embodiments, a first heat conducting adhesive layer is provided between the heat conducting member 40 and the box body 30. The first heat conducting adhesive layer is used for achieving heat conducting connection between the heat conducting member 40 and the box body 30, thus ensuring that the heat conducting member 40 can transfer the heat on the battery cells 10 to the box body 30 in time, that is, the first heat conducting adhesive layer can transfer the heat on the battery cells 10 to the box body 30 in time, so that the heat on the battery cells 10 in which thermal runaway occurs can be dissipated in time.

At the same time, by arranging the first heat conducting adhesive layer between the heat conducting member 40 and the box body 30, the first heat conducting adhesive layer can also be used for achieving fixed connection between the heat conducting member 40 and the box body 30, so that a position of the heat conducting member 40 relative to the box body 30 is stable, thus improving the working performance of the heat conducting member 40.

In specific examples, the first heat conducting adhesive layer is provided between the heat conducting member 40 and the end walls and the bottom wall of the box body 30, so that the heat conducting member 40 can be connected to different side walls of the box body 30 in a heat conducting manner, thus improving the connection strength between the heat conducting member 40 and the box body 30, while ensuring the heat conducting effect between the heat conducting member 40 and the box body 30.

Optionally, the first heat conducting adhesive layer is formed of acrylic, heat conducting silicone, and the like. While ensuring that the first heat conducting adhesive layer has a heat conducting effect, it can also ensure that the first heat conducting adhesive layer can effectively achieve fixed connection between the heat conducting member 40 and the box body 30.

Optionally, a thickness value range of the first heat conducting adhesive layer is 2 mm-5 mm. When the thickness of the first heat conducting adhesive layer is less than 2 mm, the heat conducting effect and bonding effect of the first heat conducting adhesive layer may be reduced. When the thickness of the first heat conducting adhesive layer is greater than 5 mm, on the one hand, the manufacturing costs of the first heat conducting adhesive layer may be increased, and on the other hand, the space occupied by the first heat conducting adhesive layer may also be increased, so that when the first heat conducting adhesive layer is arranged in the box body 30, the space occupied by the battery 200 may be increased.

Therefore, in the present application, the thickness value range of the first heat conducting adhesive layer is set to 2 mm-5 mm, thus reducing the manufacturing costs of the first heat conducting adhesive layer, reducing the space occupied by the first heat conducting adhesive layer, and lowering the assembling difficulty of the first heat conducting adhesive layer, while ensuring the heat conducting effect and bonding effect of the first heat conducting adhesive layer.

In specific examples, the thickness of the first heat conducting adhesive layer may be 2 mm, 3 mm, 4 mm, 5 mm, or the like.

Optionally, a second heat conducting adhesive layer is provided between the heat conducting member 40 and the opposite second side wall 112. That is to say, the heat conducting adhesive layer is not only provided between the heat conducting member 40 and the box body 30, but also between the heat conducting member 40 and the opposite second side wall 112. The second heat conducting adhesive layer is used for achieving heat conducting connection between the heat conducting member 40 and the battery cells 10, thus ensuring that the heat on the battery cells 10 can be transferred to the heat conducting member 40 in time. Then, the heat conducting member 40 transfers the received heat on the battery cells 10 to the box body 30, thus achieving the purpose of transferring the heat on the battery cells 10 to the box body 30 in time, so that the heat on the battery cells 10 in which thermal runaway occurs can be dissipated in time and the heat can be prevented from being diffused.

For the material, thickness and the like of the second heat conducting adhesive layer, refer to the first heat conducting adhesive layer, which will not be repeated here.

In some embodiments, as shown in FIG. 1 and FIG. 2, multiple rows of battery units 10A are provided in the box body 30. Each row of the battery units 10A includes multiple battery cells 10. The multiple battery cells 10 are arranged along a first direction X. The heat conducting member 40 is provided between the second side walls 112 of at least one row of the battery units 10A and the box body 30 in the first direction X. The first direction X mentioned here may be understood as an X direction shown in FIG. 1 and FIG. 2, i.e., is a length direction of the box body 30. That is to say, multiple rows of battery units 10A are arranged in the box body 30 in the present application, and each row of the battery units 10A includes multiple battery cells 10 arranged along the length direction of the box body 30.

Through the above arrangement, the space inside the box body 30 can be properly utilized to ensure that the battery 200 can include multiple battery cells 10, thus increasing the capacity of the battery 200. At the same time, it can also reduce the difficulty in connecting the multiple battery cells 10 and the difficulty in connecting the multiple rows of battery units 10A, thus improving the assembling efficiency of the battery units 10A.

At the same time, the heat conducting member 40 is provided between the second side walls 112 of at least one row of the battery units 10A and the box body 30, so as to transfer the heat on at least one row of the battery units 10A to the box body 30 through the heat conducting member 40, thus preventing a large amount of heat from being diffused between adjacent rows of battery units 10A, and preventing heat from being directly transferred between adjacent rows of battery cells 10, so as to avoid thermal diffusion and make the battery 200 meet the requirement of no thermal diffusion.

In some examples, the heat conducting member 40 is provided between the second side walls 112 of the battery cells 10 located at end portions of a row of battery units 10A and the box body 30. That is to say, in a row of battery units 10A, the second side walls 112 of the battery cells 10 located at the end portions of the battery units 10A are connected to the box body 30 through the heat conducting member 40, so as to transfer heat on the battery units 10A to the box body 30.

Through the above arrangement, when thermal runaway occurs in the battery units 10A, the heat can be transferred between adjacent battery cells 10 in the battery units 10A and to the battery cells 10 located at the end portions of the battery units 10A. After the heat is transferred to the battery cells 10 at the end portions, the heat is transferred to the box body 30 through the heat conducting member 40, thus achieving the purpose of transferring the heat on the battery units 10A to the box body 30 through the heat conducting member 40, preventing the heat from being transferred between adjacent battery units 10A, and preventing the heat from being diffused in the box body 30.

In specific examples, as shown in FIG. 1 and FIG. 2, the heat conducting member 40 is provided between the second side walls 112 of the battery cells 10 at the end portions of each row of the battery units 10A and the box body 30. That is to say, the end portions of each row of the battery units 10A are connected to the box body 30 through the heat conducting member 40, thus ensuring that the heat on each row of the battery units 10A can be transferred to the box body 30 in time, and improving the use safety of the battery 200.

It should be further noted that since the heat conducting member 40 is provided between the second side wall 112 of the battery cell 10 and the box body 30, the heat conducting member 40 can be fixed by using a pre-tightening force between the battery cell 10 and the box body 30, thus improving the position stability of the heat conducting member 40, ensuring that the heat conducting member 40 can transfer the heat, and further improving the structural stability of the battery 200.

In some examples, the thickness of the heat conducting member 40 is equal to a distance between the second side wall 112 of the battery cell 10 and the box body 30. Here, the thickness of the heat conducting member 40 may be understood as a dimension of the heat conducting member 40 extending along the first direction X. By arranging the heat conducting member 40 between the second side wall 112 of the battery cell 10 and the box body 30, the heat conducting member 40 can be fixed by using the pre-tightening force between the battery cell 10 and the box body 30, thus improving the position stability of the heat conducting member 40.

In some embodiments, as shown in FIG. 1 and FIG. 2, at least two rows of the battery units 10A are arranged in a staggered manner in the first direction X so that the first side walls 111 of adjacent rows of battery cells 10 arranged opposite each other are staggered in the first direction X. That is to say, at least two rows of the battery units 10A are arranged in a staggered manner along the length direction of the box body 30, so that the first side walls 111 of adjacent rows of battery cells 10 arranged opposite each other are staggered in the first direction X. In this way, a contact area between two battery cells 10 arranged opposite each other in adjacent rows can be reduced, thus reducing heat transfer between the two battery cells 10 arranged opposite each other, i.e., preventing the heat on one of the battery cells 10 from being all transferred to the opposite battery cell 10A when thermal runaway occurs in the battery cell 10, so as to prevent thermal diffusion and ensure that the battery 200 can meet the requirement of no thermal diffusion.

At the same time, the above arrangement can also enable one battery cell 10 in two adjacent rows of battery units 10A to be arranged directly facing towards two battery cells 10, so as to transfer the heat on the battery cell 10 to different battery cells 10, achieve the purpose of dispersing the heat, and prevent excessive heat from being transferred to one battery cell 10 to cause thermal runaway in the battery cell 10, thus improving the use safety of the battery cells 10.

Optionally, as shown in FIG. 1 and FIG. 2, multiple rows of battery units 10A are arranged in the box body 30, and every two adjacent rows of battery units 10A are arranged in a staggered manner in the first direction X, so that the first side walls 111 of the adjacent rows of battery cells 10 arranged opposite each other are staggered in the first direction X, thus avoiding thermal diffusion between adjacent rows of battery units 10A and improving the use safety of the battery cells 10.

Optionally, in adjacent rows of battery cells 10 arranged opposite each other, the contact area between the two battery cells 10 arranged opposite each other is 1/3 to 1/2 of the area of the first side wall 111. In this way, when thermal runaway occurs in one battery cell 10, the temperature transferred to the adjacent battery cells 10 can be reduced by half, thus reducing the heat transfer between adjacent battery cells 10, avoiding thermal diffusion, and ensuring that the battery 200 can meet the requirement of no thermal diffusion.

In some embodiments, as shown in FIG. 1, FIG. 2 and FIG. 3, orthographic projections of the first side walls 111 of the adjacent rows of battery cells 10 arranged in a staggered manner in a second direction Y have non-overlapping portions 20, and the non-overlapping portions 20 are in contact with the heat conducting member 40 in a heat insulating manner. The second direction Y mentioned here may be understood as a Y direction shown in FIG. 2, i.e., a width direction of the box body 30. That is to say, when the first side walls 111 of adjacent rows of battery cells 10 arranged opposite each other are staggered in the first direction X, the orthographic projections of the first side walls 111 of the adjacent rows of battery cells 10 arranged in a staggered manner in the second direction Y have the non-overlapping portions 20. The non-overlapping portions 20 are in contact with the heat conducting member 40 in a heat insulating manner to avoid direct heat transfer between the battery cells 10, that is, avoid thermal diffusion between the battery cells 10 through the heat conducting member 40, thus ensuring the heat insulating effect between the battery cells 10 and ensuring that the battery 200 can meet the requirement of no heat diffusion.

It should be noted that the non-overlapping portion 20 mentioned above may be understood as a part of the first side wall 111 of the battery cell 10 that is not in contact with the opposite battery cell 10.

To sum up, it can be seen that the heat conducting member 40 in the present application can not only achieve a heat conducting effect, but also achieve a heat insulating effect, thus preventing the heat from being transferred between the battery cells 10 while ensuring that the heat on the battery cells 10 can be effectively transferred to the box body 30.

In addition, by enabling the non-overlapping portions 20 to be in contact with the heat conducting member 40 in a heat insulating manner, it can also achieve the effect of properly utilizing the space inside the box body 30 to arrange the heat conducting member 40, so as to avoid excessive increase in the volume of the battery 200 due to the arrangement of the heat conducting member 40.

That is to say, in the present application, while ensuring that the heat conducting member 40 can effectively transfer the heat on the battery cells 10 to the box body 30 and avoid heat transfer between the battery cells 10 arranged opposite each other, it can also avoid excessive increase in the volume of the battery 200 due to the arrangement of the heat conducting member 40, thus reducing the area occupied by the battery 200 and lowering the difficulty in arranging the battery 200.

In some examples, two opposite sides of the heat conducting member 40 are in contact with two non-overlapping portions 20 in a heat insulating manner respectively, and a width of the heat conducting member 40 directly facing towards the non-overlapping portions 20 is equal to a distance between the two non-overlapping portions 20. The width of the heat conducting member 40 directly facing towards the non-overlapping portions 20 mentioned here may be understood as the dimension of the heat conducting member 40 extending along the second direction Y, so as to nest the heat conducting member 40 directly facing towards the non-overlapping portions 20 between two battery cells 10. In this way, the heat conducting member 40 can be conveniently fixed by using the pre-tightening force between the two battery cells 10 to improve the position stability of the heat conducting member 40.

Optionally, a height of the heat conducting member 40 directly facing towards the non-overlapping portions 20 is equal to that of the battery cell 10, so as to increase a contact area between the heat conducting member 40 and the battery cell 10 and improve the heat insulating effect of the heat conducting member 40.

In some other examples, when the orthographic projections of the first side walls 111 of adjacent rows of battery cells 10 arranged in a staggered manner in the second direction Y have non-overlapping portions 20, the battery 200 further includes a monitor arranged directly facing towards the non-overlapping portions 20. The monitor is configured to monitor the performance of the battery cells 10 during working and improve the use safety of the battery cells 10.

That is to say, in the present application, by properly arranging the positions of adjacent rows of battery cells 10, space can be provided for arranging other structural members (such as the monitor), thus ensuring that the monitor can be arranged in the box body 30 to monitor the performance of the battery cells 10 during working, and also avoiding the increase in space occupied by the battery 200 due to the arrangement of the monitor.

It should be noted that since the multiple rows of battery units 10A have multiple non-overlapping portions 20, in the present application, part of the non-overlapping portions 20 are in contact with the heat conducting member 40 in a heat insulating manner, and the monitor is arranged directly facing towards the other part of the non-overlapping portions 20 to achieve the proper utilization of the space inside the box body 30, thus not only preventing thermal diffusion from occurring between the two battery cells 10 arranged opposite each other, but also facilitating the monitoring of the performance of the battery cells 10 during working.

Optionally, the monitor includes a pressure sensor box, a gas analysis sensor box, and a lithium plating monitoring instrument box. The monitor is configured to respectively monitor positive and negative voltages of each row of the battery cells 10 and the position of an explosion-proof valve, thus achieving detailed monitoring of the performance and changes of each battery cell 10, and ensuring the use safety of the battery cells 10.

Optionally, sizes of the pressure sensor box, the gas analysis sensor box, and the lithium plating monitoring instrument box match the distance between the two non-overlapping portions 20, so that the monitor can be fixed by using the pre-tightening force between the two battery cells 10, thus improving the position stability of the monitor and reducing the fixed connection of the monitor.

In some examples, the monitor is arranged between two battery cells 10 and welded to the box body 30, so as to further fix the monitor and improve the position stability of the monitor.

Optionally, a buffer pad is arranged between the monitor and the battery cells 10, and the buffer pad is wrapped and combined with the battery cells 10. In this way, when the battery 200 is squeezed, the buffer pad can be triggered in time to provide buffer protection for the battery cells 10, thus reducing the impact of external squeezing force on the battery cells 10 and extending the service life of the battery cells 10.

Optionally, the buffer pad may be a rubber buffer pad or a polyurethane buffer pad to provide a buffering effect.

In some examples, when the battery 200 is squeezed, the monitor can also obtain a squeezing value. When it is determined that the squeezing value reaches a squeezing threshold, a control system of the battery 200 may actively disconnect a high-voltage protection device to improve the use safety of the battery 200.

In some embodiments, as shown in FIG. 3 and FIG. 4, the heat conducting member 40 includes a heat conducting layer 41 and a heat insulating layer 42. The heat conducting layer 41 and the heat insulating layer 42 are arranged in a stacked manner. The heat conducting layer 41 is connected to the second side walls 112 in a heat conducting manner. The heat insulating layer 42 is in contact with the non-overlapping portions 20. Therefore, it can achieve the heat conducting connection between the heat conducting member 40 and the battery cells 10, achieve contact between the heat conducting member 40 and the non-overlapping portions 20, and ensure that the heat conducting member 40 can not only achieve a heat conducting effect, but also achieve a heat insulating effect, thus preventing the heat from being transferred between the battery cells 10 and improving the use safety of the battery 200 while ensuring that the heat on the battery cells 10 can be effectively transferred to the box body 30.

Specifically, when the heat conducting layer 41 is connected to the second side walls 112 in a heat conducting manner, the heat conducting connection between the heat conducting member 40 and the battery cells 10 can be achieved. In this way, the heat conducting layer 41 can directly transfer the heat generated by the battery cells 10 to the box body 30, thus preventing the heat from being transferred to adjacent battery cells 10, improving the heat dissipation effect of the battery cells 10, preventing the heat from being transferred between the battery cells 10, and making the battery 200 meet the requirement of no heat diffusion. The heat insulating layer 42 is in contact with the non-overlapping portions 20 to achieve heat insulating match between the heat conducting member 40 and the non-overlapping portions 20, thus achieving heat insulating match between the battery cells 10 arranged opposite each other, reducing the probability of heat transfer between the two battery cells 10 arranged opposite each other, further preventing the heat from being transferred to other battery cells 10 when thermal runaway occurs in the battery cells 10, and making the battery 200 meet the requirement of no thermal diffusion.

In some examples, the heat conducting layer 41 is connected to the second side walls 112 in a heat conducting manner and the heat conducting layer 41 is connected to the box body 30 in a heat conducting manner, so as to achieve the heat conducting connection between the second side walls 112 and the box body 30 through the heat conducting layer 41.

Optionally, the heat conducting layer 41 is made of a material with a high thermal conductivity, and the thermal conductivity is greater than 1.2 W/m·K, so that the heat conducting layer 41 can effectively absorb the thermal runaway heat of the battery cells 10 and transfer the thermal runaway heat to the box body 30.

Specifically, the heat conducting layer 41 may be made of a material with a relatively high thermal conductivity, such as a heat conducting phase-change material, a heat conducting graphite sheet, a heat conducting metal sheet, a heat conducting adhesive, or a heat conducting filler.

Optionally, the heat insulating layer 42 is made of a material with a low thermal conductivity, and the thermal conductivity is less than 0.1 W/m·K, so as to ensure that the heat insulating layer 42 can prevent thermal diffusion between the battery cells 10 arranged on two opposite sides of the heat insulating layer 42, prevent thermal runaway from occurring between adjacent battery cells 10, and thus make the battery 200 meet the requirement of no thermal diffusion.

Specifically, the heat insulating layer 42 may be formed as an aerogel heat insulating pad, a ceramic heat insulating pad, or the like.

Optionally, a thickness value range of the heat insulating layer 42 is 2 mm-4 mm. When the thickness of the heat insulating layer 42 is less than 2 mm, the heat insulating effect of the heat insulating layer 42 may be reduced. When the thickness of the heat insulating layer 42 is greater than 4 mm, on the one hand, the manufacturing costs of the heat insulating layer 42 may be increased, and on the other hand, due to the fixed thickness of the heat conducting member 40, when the thickness of the heat insulating layer 42 is large, correspondingly the thickness of the heat conducting layer 41 may decrease subsequently, and the heat conducting performance of the heat conducting member 40 may be reduced.

Therefore, in the present application, by setting the thickness value range of the heat insulating layer 42 to 2 mm-4 mm, the manufacturing costs of the heat insulating layer 42 can be reduced and the heat conducting performance of the heat conducting member 40 can be guaranteed, while ensuring the heat insulating effect of the heat insulating layer 42.

In specific examples, the thickness of the heat insulating layer 42 may be 2 mm, 3 mm, 4 mm, or the like.

In some embodiments, a second heat conducting adhesive layer is provided between the heat conducting layer 41 and the opposite second side wall 112. That is to say, when the heat conducting member 40 includes the heat conducting layer 41, the second heat conducting adhesive layer is provided between the heat conducting layer 41 and the opposite second side wall 112 to achieve the heat conducting connection between the heat conducting layer 41 and the opposite second side wall 112, that is, to achieve the fixed connection between the heat conducting member 40 and the battery cells 10. In this way, it can ensure that the heat on the battery cells 10 can be effectively transferred to the heat conducting member 40, thus achieving the effect of transferring the heat on the battery cells 10 to the box body 30 through the heat conducting member 40, achieving the purpose of heat dissipation, avoiding heat transfer between the battery cells 10, and making the battery 200 meet the requirement of no heat diffusion.

In some embodiments, as shown in FIG. 4, the thickness of the heat conducting layer 41 is greater than that of the heat insulating layer 42. Therefore, the heat conducting performance of the heat conducting member 40 can be ensured, thus ensuring that the heat generated by the battery cell 10 when thermal runaway occurs can be effectively transferred to the box body 30 in time through the heat conducting member 40.

In some embodiments, a ratio of the thickness of the heat insulating layer 42 to the thickness of the heat conducting layer 41 is not greater than 1/2. That is to say, the ratio of the thickness of the heat insulating layer 42 to the thickness of the heat conducting layer 41 is less than or equal to 1/2, so as to further ensure that the thickness of the heat conducting layer 41 is greater than that of the heat insulating layer 42, make the thickness of the heat conducting layer 41 at least twice the thickness of the heat insulating layer 42, thus ensure the heat conducting performance of the heat conducting member 40, ensure that the heat conducting member 40 can effectively transfer the heat generated by the battery cells 10 when thermal runaway occurs to the box body 30, and then guide the heat to the outside through the box body 30, thus improving the use safety of the battery 200.

In specific examples, the ratio of the thickness of the heat insulating layer 42 to the thickness of the heat conducting layer 41 is equal to 1/2, 1/3, 1/4, or the like.

In some embodiments, as shown in FIG. 1, FIG. 2 and FIG. 3, the heat conducting member 40 is filled in a gap between the battery cells 10 and an inner wall of the box body 30. Therefore, the battery cells 10 can be connected to the box body 30 in a heat conducting manner through the heat conducting member 40, thus improving the use safety of the battery 200.

At the same time, the above arrangement can also avoid increasing the volume of the battery 200 due to the arrangement of the heat conducting member 40, that is, avoid increasing the space occupied by the battery 200, and reduce the difficulty in mounting the battery 200.

In addition, filling the heat conducting member 40 in the gap between the battery cells 10 and the inner wall of the box body 30 can also limit the relative positions of the battery cells 10 and the box body 30 through the heat conducting member 40, and prevent the battery cells 10 from shaking in the box body 30, thus improving the position stability of the battery cells 10, that is, improving the structural stability of the battery 200.

To sum up, in the present application, by filling the heat conducting member 40 in the gap between the battery cells 10 and the inner wall of the box body 30, while ensuring that the volume of the battery 200 is not increased, the heat conducting member 40 can be effectively arranged between the battery cells 10 and the box body 30, so as to transfer the heat on the battery cells 10 to the box body 30 through the heat conducting member 40. In addition, by using the heat conducting member 40, the position stability between the battery cells 10 and the box body 30 can be improved.

In some embodiments, the heat conducting member 40 is constructed to be deformable to buffer a stress. That is to say, the heat conducting member 40 is configured to have a buffering effect, thus protecting the battery 200 through the heat conducting member 40, improving the squeezing and impact resistance of the battery 200, and extending the service life of the battery 200.

In some examples, the heat conducting layer 41 and the heat insulating layer 42 of the heat conducting member 40 are both made of deformable materials. For example, the heat conducting layer 41 is made of a heat conducting adhesive, and the heat insulating layer 42 is made of an aerogel. In this way, while ensuring that the heat conducting member 40 has the functions of heat conduction and heat insulation, the heat conducting member 40 is deformed under external force, so as to protect the battery 200 through the heat conducting member 40.

The battery 200 of the present application will be described below in detail with reference to the drawings.

As shown in FIG. 1 and FIG. 2, the battery 200 includes: a box body 30, battery units 10A, and a heat conducting member 40.

As shown in FIG. 1 and FIG. 2, multiple rows of battery units 10A are provided in the box body 30. Each row of the battery units 10A includes multiple battery cells 10. The multiple battery cells 10 are arranged along a first direction X. Each battery cell 10 is provided with four side walls 11. The four side walls 11 include first side walls 111 and second side walls 112. The first side walls 111 and the second side walls 112 are connected to each other. The first side walls 111 are side walls with the largest area of the battery cell 10.

As shown in FIG. 1 and FIG. 2, two adjacent rows of battery units 10A are arranged in a staggered manner in the first direction X so that the first side walls 111 of adjacent rows of battery cells 10 arranged opposite each other are staggered in the first direction X, thus making orthographic projections of the first side walls 111 of adjacent rows of battery cells 10 in the second direction Y have non-overlapping portions 20.

As shown in FIG. 1, FIG. 2 and FIG. 4, the heat conducting member 40 is arranged in the box body 30 and is constructed to be deformable to buffer a stress. The heat conducting member 40 includes a heat conducting layer 41 and a heat insulating layer 42. The heat conducting layer 41 and the heat insulating layer 42 are arranged in a stacked manner, and a ratio of the thickness of the heat insulating layer 42 to the thickness of the heat conducting layer 41 is less than 1/2.

As shown in FIG. 1 and FIG. 2, the heat conducting member 40 is located between the second side walls 112 of each row of the battery units 10A and the box body 30, so that the heat conducting layer 41 of the heat conducting member 40 is connected to the second side walls 112 of the battery cells 10 at end portions of each row of the battery units 10A in a heat conducting manner, and the heat insulating layer 42 is in contact with the non-overlapping portions 20 in a heat insulating manner.

A first heat conducting adhesive layer is provided between the heat conducting layer 41 and bottom and side walls of the box body 30. A second heat conducting adhesive layer is provided between the heat conducting layer 41 and the opposite second side wall 112.

A power consuming apparatus 1000 according to an embodiment in a second aspect of the present application will be described below with reference to the drawings.

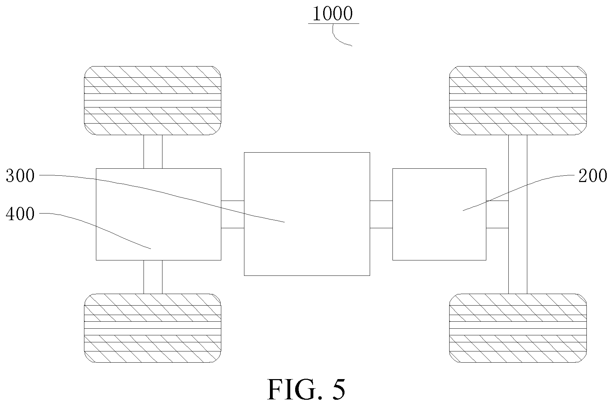

As shown in FIG. 5, the power consuming apparatus 1000 according to the embodiment of the present application includes the battery 200 described in the above embodiment. The battery 200 is configured to provide electric energy.

Since the battery 200 in the embodiment of the present application has the above technical effects, the power consuming apparatus 1000 in the embodiment of the present application also has the above technical effects, that is, by using the battery 200 in the present application, the use safety of the power consuming apparatus 1000 can be improved, and the service life of the power consuming apparatus 1000 can be extended.

It should be noted that according to an embodiment in a second aspect of the present application, a power consuming apparatus 1000 using the battery 200 as a power supply is provided. The power consuming apparatus 1000 may be, but not limited to, a mobile phone, a tablet, a laptop, an electric toy, a power tool, an electromobile, an electric vehicle, a vehicle, a ship, a spacecraft, or the like. The electric toy may include a fixed or mobile electric toy, such as a game console, an electric vehicle toy, an electric ship toy, an electric airplane toy, or the like. The spacecraft may include an airplane, a rocket, a space shuttle, a spacecraft, or the like.

FIG. 5 shows a schematic diagram when the power consuming apparatus 1000 is a vehicle. It should be noted that when the power consuming apparatus 1000 is a vehicle, the vehicle may be an oil-fueled vehicle, a gas vehicle, or a new energy vehicle. The new energy vehicle may be a pure electric vehicle, a hybrid vehicle, an extended range vehicle, or the like.

As shown in FIG. 5, the battery 200 is arranged in the vehicle. The battery 200 may be arranged at a bottom, a head or a tail of the vehicle. The battery 200 here may be configured to supply power to the vehicle. For example, the battery 200 may serve as an operating power supply of the vehicle. The vehicle may further include a controller 300 and a motor 400. The controller 300 is configured to control the battery 200 to supply power to the motor 400, for example, to meet the working power demand during vehicle start-up, navigation, and traveling.

In some embodiments of the present application, the battery 200 may not only serve as an operating power supply of the vehicle, but also serve as a driving power supply of the vehicle to replace or partially replace fuel or natural gas to provide driving power for the vehicle.

It may be understood that other compositions and operations of the battery 200 and the power consuming apparatus 1000 with the same according to the embodiments of the present application are known to those of ordinary skill in the art, which will not be described here in detail.

It should be noted that without conflict, the embodiments and features in the embodiments of the present application may be combined with each other.

What are described above are just preferred embodiments of the present application and are not intended to limit the present application. For those skilled in the art, the present application may have various modifications and variations. Any modification, equivalent replacement, improvement, and the like made within the spirit and principle of the present application should be included in the scope of protection of the present application.

## Claims

1. A battery, comprising:
a box body;
a plurality of rows of battery units, wherein the plurality of rows of battery units are arranged in the box body, each row of the battery units comprises a plurality of battery cells arranged along a first direction, each battery cell is provided with a plurality of side walls, the plurality of side walls comprise a first side wall and a second side wall, the first side wall and the second side wall are connected to each other, the first side wall is a side wall with the largest area of the battery cell, at least two rows of the battery units are arranged in a staggered manner in the first direction so that the first side walls of adjacent rows of battery cells arranged opposite each other are staggered in the first direction; and
a heat conducting member, wherein the heat conducting member is arranged in the box body, the heat conducting member is provided between the second side walls of at least one row of the battery units and the box body in the first direction so that the second side walls of at least part of the battery cells are connected to the box body in a heat conducting manner through the heat conducting member.

2. The battery according to claim 1, wherein the heat conducting member is connected to different side walls of the box body in a heat conducting manner.

3. The battery according to claim 2, wherein a first heat conducting adhesive layer is provided between the heat conducting member and the box body.

4. The battery according to any one of claims 1 to 3, wherein orthographic projections of the first side walls of the adjacent rows of battery cells arranged in a staggered manner in a second direction have non-overlapping portions, and the non-overlapping portions are in contact with the heat conducting member in a heat insulating manner.

5. The battery according to claim 4, wherein the heat conducting member comprises a heat conducting layer and a heat insulating layer arranged in a stacked manner, the heat conducting layer is connected to the second side wall in a heat conducting manner, and the heat insulating layer is in contact with the non-overlapping portions.

6. The battery according to claim 5, wherein a second heat conducting adhesive layer is provided between the heat conducting layer and the opposite second side wall.

7. The battery according to claim 5 or 6, wherein a thickness of the heat conducting layer is greater than that of the heat insulating layer.

8. The battery according to claim 7, wherein a ratio of the thickness of the heat insulating layer to the thickness of the heat conducting layer is not greater than 1/2.

9. The battery according to any one of claims 1 to 8, wherein the heat conducting member is filled in a gap between the battery cells and an inner wall of the box body.

10. The battery according to any one of claims 1 to 9, wherein the heat conducting member is constructed to be deformable to buffer a stress.

11. A power consuming apparatus, comprising the battery according to any one of claims 1 to 10, the battery being configured to provide electric energy.
